# EUROPEAN PATENT SPECIFICATION

(11) **EP 4 275 170 B1**
(45) Date of publication and mention of the grant of the patent: **17.06.2026**
(21) Application number: 21899597.5
(22) Date of filing: 21.07.2021
(51) Int. Cl.: G06Q 30/0601, G06Q 30/018, G06Q 50/10, G06F 21/62, A45D 40/00, G06F 21/64

(54) **SYSTEM AND METHOD FOR TRANSFERRING PERSONAL INNER MESSAGE**
SYSTEM UND VERFAHREN ZUR ÜBERTRAGUNG PERSÖNLICHER INNERER NACHRICHTEN
SYSTÈME ET PROCÉDÉ DE TRANSFERT DE MESSAGE INTERNE PERSONNEL

(30) Priority: 02.12.2020 CN 202011392248
(43) Date of publication of application: 15.11.2023
(73) Proprietor: Mewo Limited, Kwun Tong, Kowloon, Hong Kong (HK)
(72) Inventor: TAISNE, Laurent Jean Andre Joseph, Hong Kong (HK)
(74) Representative: Schorr, Peter Karl
(86) International application number: PCT/CN2021/107729
(87) International publication number: WO 2022/116558

(56) References cited:
- CN-A- 104 239 915
- CN-A- 107 797 999
- CN-U- 204 442 698
- US-A1- 2013 018 726
- US-A1- 2014 319 209
- US-A1- 2016 014 043
- US-A1- 2017 270 324
- US-A1- 2020 134 139

## Description

### Technical Field

This invention is related to a method for transferring personal inner message according to the generic term of claim 1, in particularly, related to a method for transferring data carrying personal inner message. This invention is also related to a system thereof.

### Background

People give gifts to their close friends or families. These gifts usually contain personal emotion and have important memorial meanings. In old days, people insert items carrying their person emotion and memory into the gifts, like paper notes with mottos, photos. But in the long-term conservation, these items are of high likelihood of being lost, or being put in some place separated from the gift so that their association with the gifts are easily to be forgotten. Additionally, due to the limited physical form of these items, the form to carry the person emotion and memory is also limited. With the development of information technology, people can store photos in digital form, however, these photos are hard to be associated with a special gift, and it's hard to keep the privacy.

There is a need for a method that bind the gifts and the personal emotion and memory carried thereon correctly, firmly and in a private form, and store them in a long time.

RFID and block chain technology are used to store some traceable information in prior arts. For example, CN110288354A discloses a label tracing system based on a block chain technology. It produces an RFID anti-counterfeit label, establishes a blockchain tracing system displayed by an intelligent terminal, and write product information in the RFID label into the block chain tracing system. The user can input the automatically acquired private key into the intelligent terminal and access the block chain tracing system through the intelligent terminal. The block chain system then displays the product source information, the production information and other information required to be traced. It uses the block chain to store the traceable information so as to guarantee the truth and liability. CN110458585A, CN109377274A, CN110505239A, CN107730277A and CN110597841A also disclose similar methods. However, there do not solve the afore-mentioned problem.

US 2017/270324 A1 discloses a system wherein digital content is associated with an NFC tag embedded in a physical object. A user may read the NFC tag with an application stored on an NFC-enabled device and assign digital content to the tag. The physical object may be passed to another user who may retrieve the digital content by reading the NFC-tag with his NFC-enabled device.

US 2014/319209 A1 relates to a system wherein files uploaded to a cloud storage are associated with bar codes and alphanumeric codes which may be provided as access tokens for retrieving the files through users. The bar codes or alphanumeric codes may be printed on a greeting card. Uploading users may decide to password protect submitted files which requires users having access to a bar code or an alphanumeric code also have to enter the respective password to gain access to a specific file.

US 2016/014043 A1 specifies an access control system comprising a server, parent and child devices and parent and child accounts, each account being associated with user name and password credentials and the child device is provided a cryptographic secret to authenticate itself with the server The parent account is used to manage the library of websites that can be accessed by the child.

US 2020/134139 A1 discloses a distributed ledger system directed to device management. The system stores information about each managed device in form of a device tokens which comprises a device identifier, an identifier of the device owner and access control policies that were defined for the device and information about software license non-fungible tokens.

### Summary

This invention is dedicated to solve the above problems to correctly, firmly and privately pass the personal inner message carried by the personal items. The term "personal inner message" in the meaning of this application refers to the message that touches people's heart, e.g. messages making a person emotional, awakening a person's memory, being memorial meaningful to a person, or giving a person a strong motivation.

The problem is solved by a method mentioned at the beginning by the characterizing part of claim 1.

According to a main aspect of this application, it is to propose a method for transferring data carrying personal inner message, including the steps of
associating an internet storage space with an electronic chip embedded in a personal item belonging to a first person, and associating the electronic chip with the first person and her/his first access authority to the internet storage space;
accessing the internet storage space via accessing the electronic chip by the first person, and uploading a personal data to the internet storage space by the first person, with the personal data carrying an inner message of said first person;
passing the personal item from the first person to a second person who is related to the first person, and authenticating the second user a second access authority to the internet storage space by the first person; and
accessing the internet storage space via accessing the electronic chip by the second person, and retrieving the personal data by the second person.

The first access authority to the internet storage space includes setting access authority of the data and access passwords for other users.

The second access authority to the internet storage space is personalized according to the relationship between the first and second users

Preferably, the internet storage space is a webpage linkage.

Preferably, the second person is emotionally related to the first person.

Preferably, the second person is in kinship of the first person.

Preferably, the personal data also carries the personal inner message of the second person.

Preferably, the personal data is a meaningful message from first person that can emotionally touch second person.

Preferably, when passing the personal item from the first person to the second person, also passing the ownership of the personal item from the first person to the second person.

Preferably, the first access authority to the internet storage space includes uploading, modifying, reading and deleting the data on the space.

Preferably, the second access authority to the internet storage space includes reading the data on the space.

Preferably, the second access authority to the internet storage space includes setting access passwords for the second person.

Preferably, the second access authority is same as the first access authority.

Preferably, the personalized authority of the second person should be set or approved by the first person Preferably, accessing the electronic chip includes using a specific gesture to approach the electronic chip to a reader.

Preferably, the specific gesture is a "tapping" hand gesture.

Preferably, the association of the internet storage space with the electronic chip is stored in block chain.

Preferably, the association of the electronic chip with the first person and her/his first access authority is stored in block chain.

Preferably, the association of the electronic chip with the second person and her/his second access authority is stored in block chain.

Preferably, the association of the electronic chip with the accessor's ID and her/his access authority is stored in block chain.

Preferably, the association of the electronic chip with the accessor's ID and her/his access authority is done before the accessor obtain the item in which the electronic chip is embedded.

Preferably, the electronic chip is encrypt.

In this application, it is further to propose a method for transferring data carrying personal inner message, including the steps of
associating an internet storage space with an electronic chip embedded in a personal item belonging to a first person, and associating the electronic chip with a first access authority to the internet storage space;
accessing the internet storage space by using the first access authority, and uploading a personal data to the internet storage space carrying an inner message of said first person;
authenticating a second access authority to the internet storage space, and associating the electronic chip with the second access authority;
accessing the internet storage space by using the second access authority, and retrieving the personal data.

Preferably, the second access authority to the internet storage space is set by the first person.

In a further aspect of this application, it is to propose a method for transferring data carrying personal inner message, including the steps of
accessing an internet storage space by a first person, and uploading a personal data to the internet storage space by the first person, with the personal data carrying an inner message of said first person;
associating the internet storage space with an electronic chip embedded in a personal item belonging to the first person, and associating the electronic chip with the first person and her/his first access authority to the internet storage space;
passing the personal item from the first person to a second person who is related to the first person, and authenticating the second user a second access authority to the internet storage space by the first person; and
accessing the internet storage space via accessing the electronic chip by the second person, and retrieving the personal data by the second person.

In yet another aspect of this application, it is to propose a method for transferring data carrying personal inner message, including the steps of
accessing an internet storage space by a first person, and uploading a personal data to the internet storage space by the first person, with the personal data carrying an inner message of said first person;
associating the internet storage space with an electronic chip embedded in a personal item belonging to the first person, and associating the electronic chip with the first person and her/his first access authority to the internet storage space;
passing the personal item from the first person to a second person who is related to the first person; and
accessing the internet storage space via accessing the electronic chip by the second person, and retrieving the personal data by the second person.

In another aspect of this application, it is to propose a system for transferring data carrying personal inner message, including
a commemorative personal item,
an electronic chip embedded in the personal item,
an internet storage space associated with the electronic chip, and
a first access authority for accessing the internet storage space;
wherein the electronic chip is associated with the first access authority to the internet storage space; and
wherein a first accessor is capable of accessing the internet storage space by using the first access authority and uploading a personal data to the internet storage space carrying an inner message of the first accessor.

Preferably, the system further includes a personal data uploaded to the internet storage space carrying an inner message.

Preferably, the system further includes a second access authority for accessing the internet storage space, and the electronic chip is further associated with the second access authority.

Preferably, a second accessor is capable of accessing the internet storage space by using the second access authority and retrieving the personal data.

In yet another aspect of this application, it is to propose a lipstick for transferring data carrying personal inner message, including
housing,
an electronic chip embedded in the housing, and
a plastic cover fit onto the housing and covering the electronic chip;
wherein the electronic chip is associated with an internet storage space, and associated with a first access authority for accessing the internet storage space; and
wherein a first accessor is capable of accessing the internet storage space by using the first access authority and uploading a personal data to the internet storage space carrying an inner message of the first accessor.

Preferably, the electronic chip is a NFC tag.

Preferably, the housing includes a lower housing and an upper housing, and the upper housing is screwed or snapped on the lower housing.

Preferably, the plastic-cover is arranged on the upper housing, close to the middle section of the lipstick.

Preferably, the plastic cover is circular.

Preferably, the housing is made of metal anda a slit is positioned below the plastic cover.

Preferably, the slit extends to the lower end of the upper housing.

According to our invention, the gift is bound with the personal emotion and memory carried thereon, and they are long-termly, firmly and privately reserved and passed.

### Brief Description of Drawings

The foregoing summary, as well as the following detailed description, will be better understood when read in conjunction with the appended drawings. For the purpose of illustration, there is shown in the drawings certain embodiments of the present disclosure. It should be understood, however, that the invention is not limited to the precise arrangements and instrumentalities shown. The accompanying drawings, which are incorporated in and constitute a part of this specification, illustrate an implementation of systems and apparatuses consistent with the present invention and, together with the description, serve to explain advantages and principles consistent with the invention.

Wherein
Figure 1 illustratively shows the method for transferring data carrying personal emotion.
Figure 2 illustratively shows a lipstick according to one preferred embodiment of this application.

### Embodiments

Before explaining at least one embodiment of the invention in detail, it is to be understood that the invention is not limited in its application to the details of construction and to the arrangements of the components set forth in the following description or illustrated in the drawings. The Figures and written description are provided to teach any person skilled in the art to make and use the inventions for which patent protection is sought. The invention is capable of other embodiments and of being practiced and carried out in various ways. Those skilled in the art will appreciate that not all features of a commercial embodiment are shown for the sake of clarity and understanding. Persons of skill in the art will also appreciate that the development of an actual commercial embodiment incorporating aspects of the present inventions will require numerous implementation-specific decisions to achieve the developer's ultimate goal for the commercial embodiment. While these efforts may be complex and time-consuming, these efforts nevertheless would be a routine undertaking for those of skill in the art having the benefit of this disclosure.

In addition, it is to be understood that the phraseology and terminology employed herein are for the purpose of description and should not be regarded as limiting. For example, the use of a singular term, such as, "a" is not intended as limiting of the number of items. Also the use of relational terms, such as but not limited to, "top," "bottom," "left," "right," "upper," "lower," "down," "up," "side," are used in the description for clarity in specific reference to the Figures and are not intended to limit the scope of the invention or the appended claims. Further, it should be understood that any one of the features of the invention may be used separately or in combination with other features. Other systems, methods, features, and advantages of the invention will be or become apparent to one with skill in the art upon examination of the Figures and the detailed description. It is intended that all such additional systems, methods, features, and advantages be included within this description, be within the scope of the present invention, and be protected by the accompanying claims.

Embodiments of the subject matter and the functional operations described in this specification optionally can be implemented in digital electronic circuitry, or in computer software, firmware, or hardware, including the structures disclosed in this specification and their structural equivalents, or in combinations of one or more of them. Embodiments of the subject matter described in this specification can, for example, be implemented as one or more computer program products, e.g., one or more modules of computer program instructions encoded on a computer readable medium for execution by, or to control the operation of, data processing apparatus.

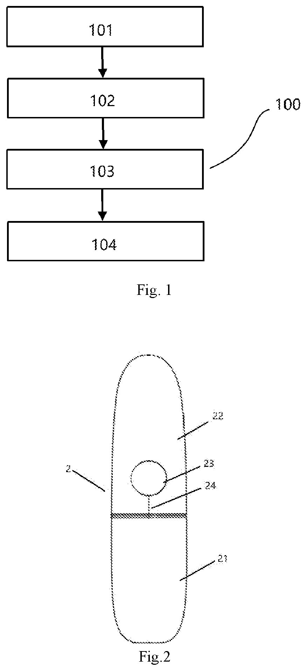

Figure 1 illustratively shows the method for transferring data carrying personal emotion.

Generally, the method 100 includes several main steps as follows. In step 101, an internet storage space is associated with an electronic chip embedded in a personal item belonging to a first user, and the electronic chip is associated with the first user and her/his first access authority to the internet storage space. In step 102, the first user accesses the internet storage space, and uploads a personal data to the internet storage space, with the personal data carrying an inner message of the first person. In step 103, the first user passes the personal item to a second user, and authenticating the second user an access authority to the internet storage space. In step 104, the second user accesses the internet storage space and retrieves the personal data carrying an inner message of the first user. Hereinafter the method will be described in more details.

An electronic chips, like a NFC/RFID chip is embedded in an item, which is preferably a gift, like any consumer product, e.g. lipstick. The embedding position is preferably on the surface of the item. Preferably, a plastic cover seals the chip on the surface of the item, so as to prevent it from falling off and liquid leakage, and ensure its wireless access in the meantime. This chip is associated with an internet storage space, e.g. a http address (or webpage linkage).

A first user, gains the access authority of the electronics chip, e.g. after purchasing that gift, and thus gains the access authority of the internet storage space. This authority includes uploading, modifying and deleting data in the internet storage space, as well as setting access authority of data of others, and access passwords. The first user could record her/his feeling, or other emotion she/he wishes to express, in form of video, audio, text or other forms, and upload the same to the internet storage space. The action of recording or uploading could be operated by a phone, e.g. an APP; the data management (like authority of writing and/or reading) is also operated by the phone.

The first user could "give" the gift to a second user. Here the word "giving" has a broad meaning, including selling, lending, even devising, and etc. The second user may only have the right of use as to the gift, other than ownership. At the same time of "giving" the gift the first user also open or transfer the access authority to the chip to the second user, and thus the access authority to the internet storage space is opened or transferred to the second user. Of course, it should be understood, in some embodiments, there may be several internet storage spaces associated with the chip, then the access authority to the internet storage spaces are not all opened or transferred to the second user.

The second user may not have as much authority as the first user, to the data saved in the internet storage space. Generally, the second user may only have a read-only authority. The authority of the second user could be personalized according to the relationship between the first and the second users, such that the second user could use her/his personalized manner to retrieve the data carrying the first user's personal emotion/ memory. The access of the second user to the Internet storage space could also be operated by a mobile phone. Such personalized authority can be obtained by a personalized key or a person's ID. Preferably, the personalized authority of the second user should be set or approved by the first user.

It is to understand that, because of the relationship of the first and second users, it is quite possible that the data carrying the first user's personal emotion/ memory could also trigger/revive the personal emotion/ memory of the second user. In such a meaning, the data also carries the second user's personal emotion/ memory.

In some other embodiments, the first user may gain the access authority of the internet storage space before purchasing that gift. After he purchases the gift, the electronic chip in the gift is then associated with the internet storage space. When the first user gains the gift, he gains the access authority of the electronic chip, but he can still access the internet storage space without accessing the electronic chip. However, when the first user "give" the gift to a second user, it is preferably so configured that the first user also open or transfer the access authority to the chip to the second user, and thus the access authority to the internet storage space is opened or transferred to the second user. Of course, in some examples, the access authority of the electronic chip and/or the access authority of the internet storage space could also be configured to be open to any second user, such that he can access the internet storage space without having a special authentication.

In preferable embodiment, the electronic chip is selected as a RF tag, which is composed with a chipset and an antenna. NFC readers are now largely integrated in smartphones, such that the access to the chip in the gift via smartphone is very convenient. The NFC tags can send readable signals at short distance (less than 10cm, preferably less than 2cm). For reading the NFC, it's just to move the reader close to the chip. However, it generally needs a specific "tapping" gesture to approach the tag to the smartphone reader. This gesture can make the object carry more personal emotion. It also avoid unwilling readings from the smartphones at proximity.

In particularly, in this invention it is preferably used NFC chipsets from NXP Company: NTAG213 or SLIX2. These chipset have a user memory larger than 1000 bit, enabling us to use a blockchain protocol elaborated by e.g. the VeChain Company. The size of the whole tag, including the antenna, is preferably adapted to the form factor of the item, e.g. the lipstick. For example, it is to choose a tag that can fit in a circle of 10mm diameter. This size allows to reserve the design of the object as well as ensuring a good reading signal power.

In a preferable embodiment, a lipstick is chosen as a gift. The tag can then be fixed to the lipstick case by any suitable means. Preferably, the tag is embedded in a plastic part that can be further clipped onto the lipstick case body, or stuck onto an inner part of the case body and facing the plastic part that can be further clipped onto the lipstick case body. This is to ensure a good signal intensity whatever material the lipstick case body is made of. This point is particularly efficient if the product material is known to damp/impede the antenna efficiency like metals for instance. In another preferable embodiment, the tag could also be sticked on the surface of the lipstick case body. Additionally, if the surface of the case is metallic, a protective material (like ferrite) can be used between the metal surface and the tag.

Fig. 2 shows a lipstick 2 according to one preferred embodiment of this application, which includes an lower housing 21 and an upper housing 22. The upper housing 22 is screwed or clap on the lower housing 21. On the upper housing 22, close to the middle section of the lipstick 2, it is arranged a circular plastic cover 23. The NFC tag (not shown) is positioned in the upper housing 22, covered by the plastic cover insert 23. There is a slit 24 below the plastic cover 23, extending to the lower end of the upper housing 22. This slit 24 enhances the signal intensity of the NFC tag. Of course, it is to note that this slit does not have to exist in other embodiments. (this is true if in this embodiment the upper housing is metallic only)

The tool to enable the user to upload her content can be any smart devices (phones, pads, computers, etc.). The interface may be a website, a native APP or any other "front end" applications. In a preferred embodiment, it is to use a WeChat environment (mini programs, official account). Preferably, upon buying the item on the WeChat mini program, the buyer can create/upload contents (text, audio, photos, videos) and associate this content to the item. The association is preferably done during the assembly of the item before shipping. The item and its embedded NFC chipset is identified and further associated to the purchase order / client in the back end. Of course, in other embodiments, the association between the ID of the item and its embedded NFC chipset and the user identification can be done after the user receives the item, and the creation/upload of the content can be done after such association.

In order to ensure a correct authentication of the product, various means can be used, e.g., secured hardware component in addition to the NFC chipset. In a preferable embodiment, it is to use block chain technology, for example the one provided by the company VeChain. The NFC chipset are pre-programmed by VeChain, and each of them is assigned with a unique ID, called VID. In a preferable embodiment, the association between the product owner (buyer) and the VID is written in the block chain.

The authentication process via VeChain protocol includes using a specific app downloaded on the user phone. This app authenticates the user e.g., via her/his WeChat account or phone number. The app emulate the NFC reader of the phone and read the NFC of the product. It then reads on the blockchain if the product is original (VID check) and if the user is the owner of the product.

Once authentication done, the user has her/his new access authority. For instance, the possibility to upload specific contents (texts, pictures, audios, videos...) and retrieve them only after authentication. Preferably, it allows the user to protect private information to be read from anyone scanning the NFC tag of the product.

For VeChain protocol, each NFC has been encrypted with a specific ID number (called VID). The existence of this VID is recorded on the blockchain. For example, upon preparation of the purchase order, before shipping step, the VID (encrypted in the NFC tag, NFC tag embedded in the product) is associated with the purchase order and the ID (e.g., name) of the purchaser. This association is written in the blockchain. Being unchangeable, this association between the VID/product and the purchaser/owner is the proof of ownership written in the blockchain. This makes it possible to check the authenticity of an object containing a VID encrypted. A NFC reader (from a cell phone for instance) is used to retrieve the information in the NFC including the VID, and the presence of the VID, as well as its corresponding authority is checked on the blockchain.

In other preferred embodiments, VID is not encrypted in NFC chip, but obtained by registration via user's phone (e.g. via APP). This VID is then associated with the user's ID (e.g., name), and then associated with the user's authority after the user gets her authority.

It will be appreciated by those skilled in the art that changes could be made to the embodiments described above without departing from the broad inventive concept thereof. It is understood, therefore, that the invention disclosed herein is not limited to the particular embodiments disclosed, but it is intended to cover modifications within the spirit and scope of the present invention as defined by the appended claims. In addition, even when the spirit and scope of the present invention is interpreted according to the particular embodiments disclosed, the spirit and scope of the present invention shall not be interpreted by adopting the donation principle, unless the applicant has expressly and specially admitted so.

## Claims

1. A method for transferring data carrying personal inner message, including the steps of
associating an internet storage space with an electronic chip embedded in a personal item belonging to a first person, and associating the electronic chip with the first person and her/his first access authority to the internet storage space;
accessing the internet storage space by the first person, and uploading a personal data to the internet storage space by the first person, with the personal data carrying an inner message of said first person;
passing the personal item from the first person to a second person who is related to the first person, and authenticating the second user a second access authority to the internet storage space by the first person; and
accessing the internet storage space via accessing the electronic chip by the second person using the second a'uthority, and retrieving the personal data by the second person, wherein
the first access authority to the internet storage space includes setting access authority of the data and access passwords for other users and the second access authority to the internet storage space is personalized according to the relationship between the first and second users.

2. The method of claim 1, wherein the internet storage space is a webpage linkage.

3. The method of claim 1, wherein the personal data also carries the personal inner message of the second person.

4. The method of claim 1, wherein the first access authority to the internet storage space includes uploading, modifying, reading and deleting the data on the space.

5. The method of claim 1, wherein the personalized authority of the second person should be set or approved by the first person

6. The method of claim 1, wherein the association of the internet storage space with the electronic chip is stored in block chain.

7. The method of claim 1, wherein the association of the electronic chip with the accessor's ID and her/his access authority is stored in block chain.

8. The method of claim 7, wherein the association of the electronic chip with the accessor's ID and her/his access authority is done before the accessor obtain the item in which the electronic chip is embedded.

9. The method of claim 1, wherein the first person accesses the internet storage space by accessing the electronic chip.
authenticating the second user a second access authority to the internet storage space by the first person.

## Patentansprüche

1. Ein Verfahren zur Übertragung von Daten, die ein persönliche Botschaft aufweisen, wobei das Verfahren die folgenden Schritte umfasst:
Zuordnen eines Internetspeicherplatzes zu einem elektronischen Chip, der in einen persönlichen Gegenstand eingebettet ist, der einer ersten Person gehört, und Zuordnen des elektronischen Chips zu der ersten Person und ihrer ersten Zugriffsberechtigung zum Internetspeicherplatz;
Zugreifen auf den Internetspeicherplatz durch die erste Person, und Hochladen von persönlichen Daten auf den Internetspeicherplatz durch die erste Person, wobei die persönlichen Daten eine Botschaft der besagten ersten Person aufweisen;
Weitergeben des persönlichen Gegenstands von einer ersten Person an eine zweite Person, die mit der ersten Person in Beziehung steht, und Authentifizieren des zweiten Nutzers mit einer zweiten Zugriffsberechtigung durch die erste Person; und
Zugreifen auf den Internetspeicherplatz über Zugreifen auf den elektronischen Chip durch die zweite Person, unter Verwendung der zweiten Berechtigung, und Abrufen der persönlichen Daten durch die zweite Person, wobei die erste Zugriffsberechtigung auf den Internetspeicherplatz das Festlegen von Zugriffsberechtigungen beinhaltet und die zweite Zugriffsberechtigung auf den Internetspeicherplatz gemäß der Beziehung zwischen dem ersten und zweiten Nutzer personalisiert wird.

2. Verfahren nach Anspruch 1, wobei der Internetspeicherplatz eine Webseitenverknüpfung ist.

3. Verfahren nach Anspruch 1, wobei die persönlichen Daten auch eine persönliche Botschaft der zweiten Person aufweisen.

4. Verfahren nach Anspruch 1, wobei die erste Zugriffsberechtigung auf den Internetspeicherplatz das Hochladen, Ändern, Lesen und Löschen auf dem Speicherplatz beinhaltet.

5. Verfahren nach Anspruch 1, wobei die personalisierte Berechtigung der zweiten Person von der ersten Person festgelegt oder genehmigt werden sollte

6. Verfahren nach Anspruch 1, wobei die Zuordnung des Internetspeicherplatzes zum elektronischen Chip in einer Blockchain gespeichert ist.

7. Verfahren nach Anspruch 1, wobei die Zuordnung des elektronischen Chips zur ID des Zugriffsberechtigten und seiner Zugriffsberechtigung in einer Blockchain gespeichert ist.

8. Verfahren nach Anspruch 7, wobei die Zuordnung des elektronischen Chips zur ID des Zugriffsberechtigten und seiner Zugriffsberechtigung erfolgt, bevor der Zugriffsberechtigte den Gegenstand erhält, in den der elektronische Chip eingebettet ist.

9. Verfahren nach Anspruch 1, wobei die erste Person durch Zugreifen auf den elektronischen Chip auf den Internetspeicherplatz zugreift
und den zweiten Nutzer mit einer zweiten Zugriffsberechtigung auf den Internetspeicherplatz authentifiziert.

## Revendications

1. Une méthode de transfert de données contenant un message personnel, comprenant les étapes liées
à l'association d'un espace de stockage sur Internet à une puce électronique intégrée dans un objet personnel appartenant à une première personne, et à l'association de la puce électronique à la première personne et à son premier droit d'accès à l'espace de stockage sur Internet;
à l'accès à l'espace de stockage sur Internet par la première personne, et au téléchargement de données personnelles vers l'espace de stockage sur Internet par la première personne, les données personnelles contenant un message personnel de ladite première personne;
à la transmission de l'objet personnel de la première personne à une seconde personne liée à la première personne, et à l'authentification de la seconde personne en lui attribuant un second droit d'accès à l'espace de stockage sur Internet par la première personne; et
à l'accès à l'espace de stockage sur Internet via l'accès à la puce électronique par la seconde personne à l'aide du second droit, et la récupération des données personnelles par la seconde personne, dans laquelle le premier droit d'accès à l'espace de stockage sur Internet comprend la définition du droit d'accès aux données et des mots de passe d'accès pour d'autres utilisateurs, et le second droit d'accès à l'espace de stockage sur Internet est personnalisé en fonction de la relation entre les premier et second utilisateurs.

2. Procédé selon la revendication 1, dans lequel l'espace de stockage sur Internet est un lien vers une page web.

3. Procédé selon la revendication 1, dans lequel les données personnelles contiennent également le message personnel de la seconde personne.

4. Procédé selon la revendication 1, dans lequel le premier droit d'accès à l'espace de stockage sur Internet comprend le téléchargement, la modification, la lecture et la suppression des données sur cet espace.

5. Procédé selon la revendication 1, dans lequel l'autorisation personnalisée de la seconde personne doit être définie ou approuvée par la première personne.

6. Procédé selon la revendication 1, dans lequel l'association de l'espace de stockage sur Internet avec la puce électronique est stockée dans une blockchain.

7. Procédé selon la revendication 1, dans lequel l'association de la puce électronique avec l'identifiant de l'utilisateur et son droit d'accès est stockée dans une blockchain.

8. Procédé selon la revendication 7, dans lequel l'association de la puce électronique avec l'identifiant de l'utilisateur et son droit d'accès est effectuée avant que l'utilisateur n'obtienne l'objet dans lequel la puce électronique est intégrée.

9. Procédé selon la revendication 1, dans lequel la première personne accède à l'espace de stockage sur Internet en accédant à la puce électronique
authentifiant le second utilisateur et lui accordant un second droit d'accès à l'espace de stockage sur Internet par la première personne.
